# EUROPÄISCHE PATENTSCHRIFT

(11) **EP 3 066 337 B1**
(45) Veröffentlichungstag und Bekanntmachung des Hinweises auf die Patenterteilung: **12.07.2023**
(21) Anmeldenummer: 14789996.7
(22) Anmeldetag: 23.10.2014
(51) Int. Cl.: F03D 1/06

(54) **ROTORBLATT EINER WINDENERGIEANLAGE UND WINDENERGIEANLAGE**
ROTOR BLADE OF A WIND TURBINE AND A WIND TURBINE
PALE DE ROTOR D'UNE ÉOLIENNE ET ÉOLIENNE

(30) Priorität: 04.11.2013 DE 102013222375; 26.02.2014 DE 102014203442
(43) Veröffentlichungstag der Anmeldung: 14.09.2016
(73) Patentinhaber: Siemens Gamesa Renewable Energy Service GmbH, 20097 Hamburg (DE)
(72) Erfinder: ERBSLÖH, Sascha, 24784 Westerrönfeld (DE); KORJAHN, Christoph Matthias, 24358 Ahlefeld-Bistensee (DE); PETSCHE, Marc, 24809 Nübbel (DE)
(74) Vertreter: Wallinger Ricker Schlotter Tostmann
(86) Internationale Anmeldenummer: PCT/EP2014/002864
(87) Internationale Veröffentlichungsnummer: WO 2015/062710

(56) Entgegenhaltungen:
- EP-A1- 2 141 358
- EP-A1- 2 514 961
- DE-A1-102006 017 897
- BARLAS T K ET AL: "Review of state of the art in smart rotor control research for wind turbines", PROGRESS IN AEROSPACE SCIENCES, OXFORD, GB, Bd. 46, Nr. 1, 1. Januar 2010 (2010-01-01) , Seiten 1-27, XP026794026, ISSN: 0376-0421 [gefunden am 2009-09-15]

## Beschreibung

Die Erfindung betrifft ein Rotorblatt einer Windenergieanlage mit einer Längserstreckung, die sich von einer Rotorblattwurzel zu einer Rotorblattspitze erstreckt, wobei das Rotorblatt ein in Längsrichtung veränderliches Querschnittsprofil aufweist, das eine Profilvorderkante und eine Profilhinterkante aufweist, die über eine Saugseite und eine Druckseite des Querschnittsprofils verbunden sind, sowie eine Windenergieanlage und eine Verwendung.

Moderne Windenergieanlagen mit zwei oder mehr Rotorblättern werden im Bereich größerer Windgeschwindigkeiten zur Lastbegrenzung mit veränderlichen Blatteinstellwinkeln, auch Pitchwinkel genannt, betrieben. Durch eine Vergrößerung der Betriebsgröße Blatteinstellwinkel wird der aerodynamische Anstellwinkel bei höheren Windgeschwindigkeiten verkleinert, um den Auftrieb und die entnommene Leistung zu reduzieren. Dabei ist der Anstellwinkel der Winkel zwischen der Anströmrichtung des Windes und der Sehne, also der Verbindungslinie zwischen der Vorderkante und der Hinterkante des aerodynamischen Rotorblattprofils. Im Rahmen der vorliegenden technischen Lehre ist der Zusammenhang zwischen Rotorblatteinstellwinkel und Anstellwinkel wie üblich so definiert, dass eine Erhöhung des Blatteinstellwinkels zu einer Verkleinerung des Anstellwinkels führt. Der Anstellwinkel kann auch negativ werden.

Rotorblätter von Windenergieanlagen weisen außerdem einen sogenannten Twist bzw. eine Verwindung auf, sind also entlang ihrer Längserstreckung so verwunden, dass die Sehne, also die Verbindungslinie zwischen Profilvorderkante und Profilhinterkante im Verlauf der Längserstreckung des Rotorblatts von der Blattwurzel zur Blattspitze hin rotiert wird. Die durch die Sehne aufgespannte Fläche entlang der Längserstreckung des Rotorblatts bildet somit eine Art verzerrte Schraubenfläche derart, dass der aerodynamische Anstellwinkel an der Blattspitze kleiner ist als an der Blattwurzel. Dadurch wird erreicht, dass das Rotorblatt bei kleinen und mittelgroßen Windgeschwindigkeiten, bei denen noch keine Blattverstellung erfolgt, mit der Rotorblattspitze im Mittel mit einem optimalen Anstellwinkel betrieben wird und hier die größte Leistung entnommen wird. Die in Bezug auf die Rotorfläche inneren Teile des Rotorblatts, also die blattwurzelnahen Bereiche, tragen hierzu weniger bei. In diesem Betriebsmodus beträgt der Blatteinstellwinkel vorliegend definitionsgemäß 0°. Ferner kann hier das Rotorblatt in eine windabgewandte Ruheposition, die sogenannte Fahnenstellung, verschwenkt werden, die in etwa einer 90°-Stellung des Blatteinstellwinkels nach der vorliegenden Definition entspricht.

Zur Steigerung des Jahresenergieertrags der Windenergieanlagen werden moderne Rotorblätter immer größer dimensioniert. Für den Offshore-Betrieb ist dazu noch eine hohe Abschaltgeschwindigkeit wirtschaftlich sinnvoll. Diese Kombination führt, vor allem bei geringer Flächenbelastung des Rotors dazu, dass die Windenergieanlage bei hohen Windgeschwindigkeiten und sehr hohen positiven Pitchwinkeln, beispielsweise größer als 30°, betrieben werden muss. Bei solch hohen positiven Pitchwinkeln ist der Anstellwinkel im Bereich der Rotorblattspitze bereits weit im negativen Bereich, so dass dem Wind vermehrt nur im inneren Bereich des Rotors Energie entzogen wird. Die zunehmend negativeren Anstellwinkel im Blattspitzenbereich können den negativen Stallwinkel αₛₙ unterschreiten. Es findet dann eine Ablösung der Luftströmung auf der Druckseite des Profils statt und der Widerstandskoeffizient C_{D} steigt schlagartig an. Der hohe negative Gradient dC_{D}/dα geht mit einer plötzlichen Verringerung der Dämpfung in Edge-Richtung einher und kann eine dimensionierende, also einschränkende, negative Edge-Extremlast sein. Die weitere Vergrößerung von Rotorblättern führt somit in extremen Fällen in aerodynamisch instabile Bereiche, die die Rotorblätter stark belasten können. Dieses ist bei dem Design von Rotorblättern zu beachten. Einige Lösungen aus dem Stand der Technik sind in den Dokumenten EP 2 141 358 A1 und DE 10 2006 017897 zu finden.

Aus EP 2 514 961 A1 ist ein Spoiler für ein Rotorblatt einer Windenergieanlage bekannt, der im Übergangsbereich vom zylindrischen Blattwurzelteil zum Bereich mit vollständigem Rotorblattprofil im Bereich der Profilhinterkante auf der Druckseite angebracht wird. Damit sollen die Menge der Verwirbelungen sowie die Lärmerzeugung im Übergangsbereich reduziert werden.

Einen Überblick über bekannte Modifikationen von Rotorblättern gibt auch der Artikel von T.K. Barlas und G.A.M. van Kuik, "Review of state of the art in smart rotor control research for wind turbines", Progress in Aerospace Sciences 46 (2010) 1 - 27.

Hiervon ausgehend liegt der vorliegenden Erfindung die Aufgabe zugrunde, die Energieausbeute von Rotorblättern von Windenergie anlagen weiter zu erhöhen, wobei zusätzliche Belastungen, besonders in extremen Situationen des Rotorblatts, kleingehalten werden sollen.

Diese der Erfindung zugrunde liegende Aufgabe wird durch ein Rotorblatt einer Windenergieanlage gemäß Anspruch 1 gelöst.

Der Erfindung liegt die Idee zugrunde, die Energieausbeute im wurzelblattnahen Bereich zu optimieren. An der Blattwurzel findet bekanntlich ein Übergang zwischen einem zylindrischen oder ovalen Körper und dem ersten stumpfen Blattwurzelprofil statt. Dieser Übergangsbereich trägt mit konventionellen Profilen bisher fast gar nicht zur Rotorleistung bei, da durch die kreisrunde bzw. ovale Geometrie nur unwesentlich Auftrieb produziert werden kann. Diese Geometrie ist vielmehr ein Widerstand für die umströmende Luft.

Dadurch, dass erfindungsgemäß nunmehr bereits, vorzugsweise vom Blattanschluss an, im Bereich mit zylindrischem oder ovalem Querschnitt auf der Druckseite eine Strömungsabrissinduktionsvorrichtung vorgesehen ist, wird dem ansonsten in Anströmrichtung symmetrischen Profil eine Asymmetrie gegeben, die dafür sorgt, dass die umströmende Luft stromabwärts des Profils in Richtung der Druckseite abgelenkt wird. Dies geht mit einem Impuls des Profils in Richtung auf die Saugseite einher, so dass ein Auftrieb induziert wird. Die Strömungsabrissinduktionsvorrichtung erstreckt sich in den Übergangsbereich mit dem stumpfen Profil hinein und legt sich dort an die druckseitige Kante der stumpfen Hinterkante an. Hierdurch wird der auftriebserzeugende Effekt auch in den Übergangsbereich hinein fortgesetzt.

Die Strömungsabrissinduktionsvorrichtung trägt wenig zur strukturellen Belastung des Rotorblatts bei. Im Volllastbetrieb wird der Rotorblattwinkel verstellt, so dass die Strömungsabrissvorrichtung aus dem Wind heraus gedreht wird und wenig zur Aerodynamik mehr beiträgt. Die Blattwinkelregelung erfolgt vielmehr in Bezug auf die weiter in Richtung der Rotorblattspitzen herrschenden momentanen Verhältnisse. Im Volllastbereich wird der zusätzliche Auftrieb auch von dem durch das eigentliche aerodynamische Vollprofil erzeugten Auftrieb überlagert. Die Strömungsabrissinduktionsvorrichtung kann daher an bestehende Rotorblattgeometrien angesetzt werden, ohne dass diese hierauf speziell angepasst werden müssen.

Vorzugsweise ist die Strömungsabrissinduktionsvorrichtung als ein, insbesondere in Längsrichtung des Rotorblatts ein- oder mehrfach unterteilter, längserstreckter im Wesentlichen radial vom Profil abstehender Flächenkörper ausgebildet, dessen abstehende Höhe zwischen 1% und 5% der Sehnenlänge des Querschnittsprofils beträgt, insbesondere zwischen 1% und 3% der Sehnenlänge, insbesondere bis zu 2% der Sehnenlänge. Somit ergibt sich ein längserstrecktes, in der Höhe sehr kleinbauendes aerodynamisch wirksames Element. Eine solche Strömungsabrissinduktionsvorrichtung wird auch "Tab" genannt.

Die Strömungsabrissinduktionsvorrichtung ist im rotorblattwurzelseitigen zylindrischen oder ovalen Teil des Rotorblatts an der dicksten Stelle des runden oder ovalen Profils angeordnet, in Bezug auf eine Anströmungsrichtung eines Windfeldes bei Betrieb einer Windenergieanlage im Teillastbereich kurz unterhalb ihrer Nennleistung, insbesondere bei zwischen 90% und 100% ihrer Nennleistung. Im Teillastbereich unterhalb der Nennlast findet noch keine Rotorblattwinkelverstellung statt. Das Rotorblatt befindet sich in der 0°-Position. Mit steigender Windgeschwindigkeit verändert sich die Anströmrichtung des anströmenden Windfeldes auf dem rotorblattwurzelnahen Bereich des Rotorblatts. Den stärksten Effekt entfaltet die Strömungsabrissinduktionsvorrichtung somit kurz vor Erreichen der Nennleistung, also kurz bevor die Blattwinkelverstellung bei höheren Windgeschwindigkeiten beginnt. Bei bekannter Soll-Rotordrehzahl ist der Anströmwinkel bzw. die Anströmrichtung des Windfeldes für diesen Bereich bekannt.

Vorteilhafterweise ist die Strömungsabrissinduktionsvorrichtung in Längsrichtung des Rotorblatts in zwei oder mehr Teilflächenkörper mit dazwischen angeordneten Biegungsfugen unterteilt, wobei insbesondere die Teilflächenkörper jeweils eine Länge zwischen 30 und 100 cm aufweisen und die Biegungsfugen ein Spaltmaß von zwischen 1 und 5 mm, insbesondere zwischen 1 und 3 mm, aufweisen. Mit dieser Unterteilung wird die Strömungsabrissinduktionsvorrichtung durch Biegungen des Rotorblatts unter Belastung nicht oder nur wenig belastet. Auch die Verbindung der Strömungsabrissinduktionsvorrichtung mit dem Rotorblatt wird dadurch wenig belastet. Die Teilflächenkörper laufen vorteilhafterweise an den Enden dünn aus. Sie haben somit vorteilhafterweise keine konstante Dicke.

In einer vorteilhaften Ausführung ist die Strömungsabrissinduktionsvorrichtung auf das Rotorblatt aufgeklebt und/oder auflaminiert und insbesondere unter Verwendung eines GFK-Materials oder eines Spritzgussmaterials hergestellt.

In einer vorteilhaften Weiterbildung endet die Strömungsabrissinduktionsvorrichtung in Richtung auf die Rotorblattspitze im Übergangsbereich an einer Position, an der das Rotorblatt ein stumpfes aerodynamisches Querschnittsprofil aufweist. Dies bedeutet im vorliegenden Zusammenhang auch, dass die Strömungsabrissinduktionsvorrichtung bereits vor dem Ende des Übergangsbereichs enden kann, also nicht bis zu dem Bereich reichen muss, an dem ein Vollprofil mit "spitzer" Profilhinterkante ausgebildet ist.

Damit wird erreicht, dass die Strömungsabrissinduktionsvorrichtung dem Rotorblatt nicht in einem Bereich einen erhöhten Widerstand verleiht, in dem dies nachteilig ist, wie bei Profilen mit spitzer Hinterkante. Bei stumpfen Profilen ist dies weniger nachteilig.

In einer bevorzugten Weiterbildung sind in dem Übergangsbereich auf der Saugseite des Rotorblatts wenigstens eine Reihe von Vortexgeneratoren und/oder Wirbelkanten angeordnet, wobei sich die Reihe von Vortexgeneratoren und/oder Wirbelkanten und die Strömungsabrissinduktionsvorrichtung in Längsrichtung des Rotorblatts im Übergangsbereich wenigstens teilweise überschneiden, insbesondere bei einer relativen Profildicke von zwischen 60% und 80%, insbesondere zwischen 65% und 75%. Die Vortexgeneratoren und/oder Wirbelkanten selbst sind in einer Reihe angeordnet, die, von der Rotorblattwurzel aus gesehen, im Übergangsbereich beginnt und sich in den Vollprofilbereich erstreckt. In diesem Bereich sorgt die Reihe von Vortexgeneratoren und/oder Wirbelkanten dafür, dass die Strömung der das Rotorblatt umstreichenden Luft auf der Saugseite länger auf der Rotorblattoberfläche verweilt und sich später ablöst, als dies ohne Vortexgeneratoren und/oder Wirbelkanten der Fall wäre. Dies ist insbesondere in Bereichen des Rotorblatts mit relativ starker Oberflächenkrümmung wirksam. Dadurch, dass die Reihe der Vortexgeneratoren und/oder Wirbelkanten sich im Übergangsbereich mit der druckseitigen Strömungsabrissinduktionsvorrichtung abschnittsweise überlappt, werden abrupte Strömungsverhältnisänderungen und 3D-Effekte minimiert, die das Auftriebsverhalten des Rotorblatts negativ beeinflussen könnten.

Ein weiterer Vorteil der Kombination der Vortexgeneratorenreihe und/oder Wirbelkantenreihe mit der druckseitigen Strömungsabrissinduktionsvorrichtung ist, dass die Strömungsabrissinduktionsvorrichtung kleinbauend gehalten werden kann. Die Kombination ermöglicht es auch, im Wesentlichen kontinuierlich Auftrieb und daher kontinuierliche Induktion fast bis zum Blattanschluss zu generieren und so die Rotorleistung zu verbessern.

Die Reihe von Vortexgeneratoren und/oder Wirbelkanten erstreckt sich vorteilhafterweise in den Bereich, in dem das Rotorblatt ein aerodynamisches Vollprofil aufweist, wobei insbesondere blattspitzenseitig die Reihe der Vortexgeneratoren und/oder Wirbelkanten bei zwischen 30% und 55%, insbesondere zwischen 40% und 50%, der Rotorblatterstreckung von der Rotorblattwurzel zur Rotorblattspitze endet.

Durch den hier vorgeschlagenen Einsatz einer Strömungsabrissinduktionsvorrichtung, die als Abrisskante ausgebildet sein kann, wird mit einem relativ kleinen Bauteil von typischerweise nur 2% der Sehnenlänge eines Profils signifikant Auftrieb im Wurzelbereich generiert. Vor allem dem zylindrischen Blattanschluss ermöglicht es hohe Auftriebsbeiwerte von über 1,5 bei einer Gleitzahl von bis zu 3 im Bereich des zylindrischen Profilschnitts.

Vorzugsweise sind die Wirbelkanten als scharfkantige oder abgerundete Formkörper ausgebildet und/oder weisen einen mit einem faserverstärkten Verbundmaterial überlaminierten Schaumkern auf und/oder sind mittels einer Schicht aus einem faserverstärkten Verbundmaterial auf das Rotorblatt auflaminiert.

Erfindungsgemäß werden zusätzlich oder alternativ zu Vortexgeneratoren somit als Formkörper ausgebildete Wirbelkanten verwendet. Vortexgeneratoren werden an Rotorblättern im Allgemeinen als dreieckige Flächenkörper eingesetzt, die meist aus einem Kunststoff gegossen sind. In der Reihe der Vortexgeneratoren können die einzelnen Vortexgeneratoren alternierend schräg aufgestellt sein. In Einzelfällen kommt es nach mehreren Jahren zur Materialermüdung und zum Versagen einzelner Vortexgeneratoren der Reihe.

Alternativ oder zusätzlich hierzu sind somit vorteilhafterweise als Formkörper ausgebildete Wirkbelkanten vorgesehen. Diese sind massiver als die als Flächenkörper ausgebildeten Vortexgeneratoren und damit auch länger haltbar. Durch die Ausbildung von scharfen Kanten können ähnliche Effekte der Verwirbelung erzielt werden wie mit Vortexgeneratoren. Vorteilhafte Formen der Formkörper sind beispielsweise keilförmige Formkörper mit dreieckiger Grundfläche, deren Spitze zur Profilvorderkante, also in den anströmenden Wind hinein gerichtet ist. Ebenfalls ist eine Kreisscheibenabschnittsform mit scharfen Seitenkanten mit Vorteil einsetzbar. Alternativ können die Formkörper auch abgerundet sein, etwa hügelförmig. Die Erhebungen sorgen ebenfalls für eine Verwirbelung, da die Luft über die Erhebungen schneller strömen muss als zwischen den Erhebungen und sich so ein Geschwindigkeitsunterschied ergibt.

Die Höhe der Wirbelkanten entspricht vorzugsweise der Dicke der lokalen Grenzschicht. Diese ist bei der Auslegung eines Rotorblatts üblicherweise bekannt oder kann berechnet werden.

Vorteilhafterweise ist vorgesehen, dass die Wirbelkanten paarweise radial gestaffelt auf dem Rotorblatt angeordnet sind. Dies bedeutet, dass jeweils zwei benachbarte Formkörper bzw. Wirbelkanten in Luftanströmungsrichtung unterschiedlich weit nach vorne bzw. hinten zueinander versetzt angeordnet sind. Dadurch ergibt sich eine weiter verstärkte seitliche Komponente der Luftströmung, die die Verwirbelung weiter befördert.

Die der Erfindung zugrunde liegende Aufgabe wird auch durch eine Windenergieanlage mit einem zuvor beschriebenen erfindungsgemäßen Rotorblatt gelöst, sowie durch eine Verwendung einer Strömungsabrissinduktionsvorrichtung zur Erzeugung von Auftrieb in einem Blattwurzelbereich eines zuvor beschriebenen erfindungsgemäßen Rotorblatts.

Die zu dem erfindungsgemäßen Rotorblatt und seinen Ausführungsformen und Weiterbildungen genannten Merkmale, Eigenschaften und Vorteile gelten auch in gleicher Weise für die Windenergieanlage mit dem entsprechenden Rotorblatt sowie die entsprechende Verwendung.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine Perspektivdarstellung eines Rotorblatts,
- Fig. 2 a), b): Diagramme des Auftriebskoeffizienten und des Widerstandskoeffizienten eines Rotorblattprofils als Funktion des Anstellwinkels,
- Figur 3: eine nicht maßstabsgetreue Draufsicht auf ein erfindungsgemäßes Rotorblatt,
- Fig. 4: Querschnittsdarstellungen durch verschiedene Profilbereiche des Rotorblatts gemäß Fig. 3,
- Fig. 5 a), b): Illustrationen der Strömung um ein zylindrisches Profil ohne und mit erfindungsgemäßer Strömungsabrissinduktionsvorrichtung,
- Fig. 6: eine schematische Detailansicht einer erfindungsgemäßen Strömungsabrissinduktionsvorrichtung,
- Fig. 7 a), b): Querschnittsdarstellungen durch einen Profilbereich eines Rotorblatts und
- Fig. 8 a) bis c): schematische perspektivische Darstellungen beispielhafter Wirbelkanten.

In den Zeichnungen sind jeweils gleiche oder gleichartige Elemente und/oder Teile mit denselben Bezugsziffern versehen, so dass von einer erneuten Vorstellung jeweils abgesehen wird.

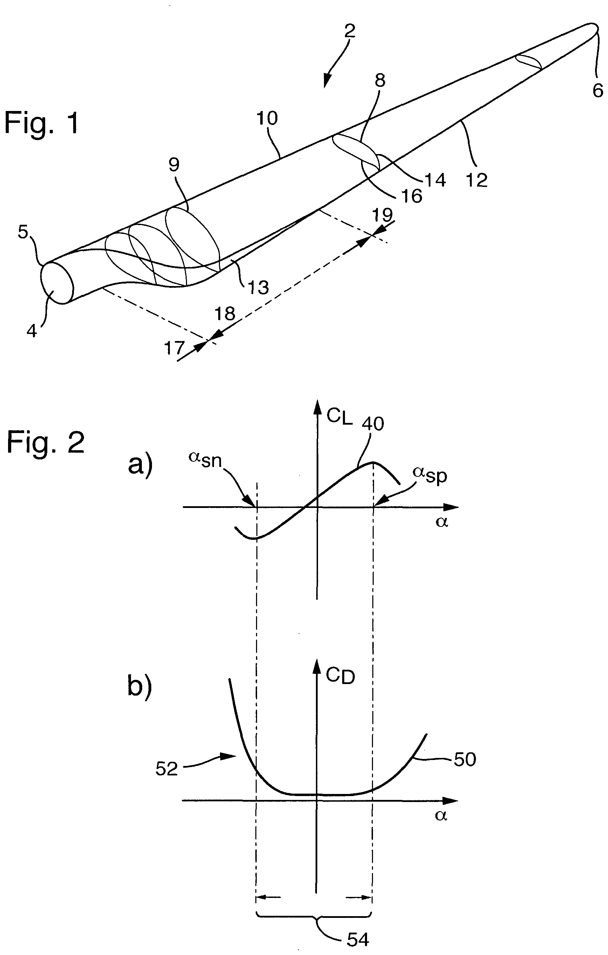

In Fig. 1 ist ein Rotorblatt 2 einer Windenergieanlage in einer perspektivischen Ansicht schematisch dargestellt. Das Rotorblatt 2 weist eine Längserstreckung von einer Rotorblattwurzel 4 mit rundem Querschnitt zu einer Rotorblattspitze 6 auf. Sein Profil weist in seiner Längserstreckung eine Vielzahl von aerodynamischen Querschnittsprofilen 8, 9 auf, von denen einige als Querschnittsformen dargestellt sind. So ist im mittleren Bereich, dem in diesem Zusammenhang so genannten Vollprofilbereich 19, ein aerodynamisches Querschnittsprofil 8 in Form eines Vollprofils gezeichnet, das sich von einer Profilvorderkante 10 zu einer Profilhinterkante 12 erstreckt und eine Saugseite 14 und eine Druckseite 16 aufweist.

In einem wurzelnäheren Übergangsbereich 18 ist die Profilhinterkante 12 abgeschnitten und geht in eine stumpfe Hinterkante 13 über, die sich zur Blattwurzel 4 hin weiter verbreitert und schließlich im zylindrischen Bereich 17 in den runden Querschnitt 5 der Rotorblattwurzel 4 übergeht. In dem Übergangsbereich 18 mit der stumpfen Hinterkante 13 ist ein stumpfes aerodynamisches Querschnittsprofil 9 gezeigt, das eine größere relative Dicke als das aerodynamische Querschnittsprofil 8 im mittleren Bereich des Rotorblatts aufweist, wobei die relative Dicke als Verhältnis von Dicke zu Sehnenlänge von Profilvorderkante 10 zu Profilhinterkante 12 definiert ist. Ferner sind die nicht dargestellten Sehnen, also die Verbindungslinien zwischen Profilvorderkante 10 und Profilhinterkante 12 im blattwurzelnahen Bereich in einer Ebene angeordnet, die gegenüber der Ebene der Sehnen im blattspitzennahen Bereich verdreht ist.

In Fig. 2a) ist die Abhängigkeit des Auftriebsbeiwerts C_{L} als Kurve 40 in Abhängigkeit vom Anstellwinkel α dargestellt. Bei einem Anstellwinkel von 0° ergibt sich ein leicht positiver Auftriebsbeiwert.

Die Steigung der Kurve 40 ist positiv, so dass bei einer Erhöhung des Anstellwinkels α auch der Auftriebswert C_{L} steigt und bei negativen Anstellwinkeln α der Auftriebsbeiwert C_{L} sinkt und negativ wird.

Bei einem Wert αₛₚ, dem sogenannten positiven Stallwinkel, reißt die Strömung an der Saugseite ab und der Auftriebsbeiwert C_{L} verringert sich wieder. Im Nennbetrieb wird das Rotorblatt bei einem positiven Anstellwinkel α unterhalb des positiven Stallwinkels betrieben. Bei negativen Anstellwinkeln unterhalb eines negativen Stallwinkels αₛₙ reißt die Luftströmung an der Druckseite ab (sogenannte negativer Stall) und der Auftriebsbeiwert C_{L} sinkt betragsmäßig wiederum ab. Somit ergibt sich ein nutzbarer Bereich 54 zwischen dem negativen Stallwinkel αₛₙ und dem positiven Stallwinkel αₛₚ, in dem das Rotorblatt 2 betrieben werden kann. In diesem Bereich werden die jeweiligen Profile vorzugsweise betrieben.

In Fig. 2b) ist ebenfalls gegen den Anstellwinkel α der Verlauf des Widerstandskoeffizienten bzw. Widerstandsbeiwerts C_{D} als Kurve 50 dargestellt. Dieser ist in einem weiten Bereich des nutzbaren Bereichs 54 von Anstellwinkel α betragsmäßig klein, steigt jenseits der Stallwinkel αₛₚ und αₛₙ stark an. Bei Unterschreiten des negativen Stallwinkels αₛₙ ergibt sich ein extremer negativer Gradient (dC_{D}/dα). Insbesondere dieser Fall ist bei der Dimensionierung von Rotorblättern zu berücksichtigen.

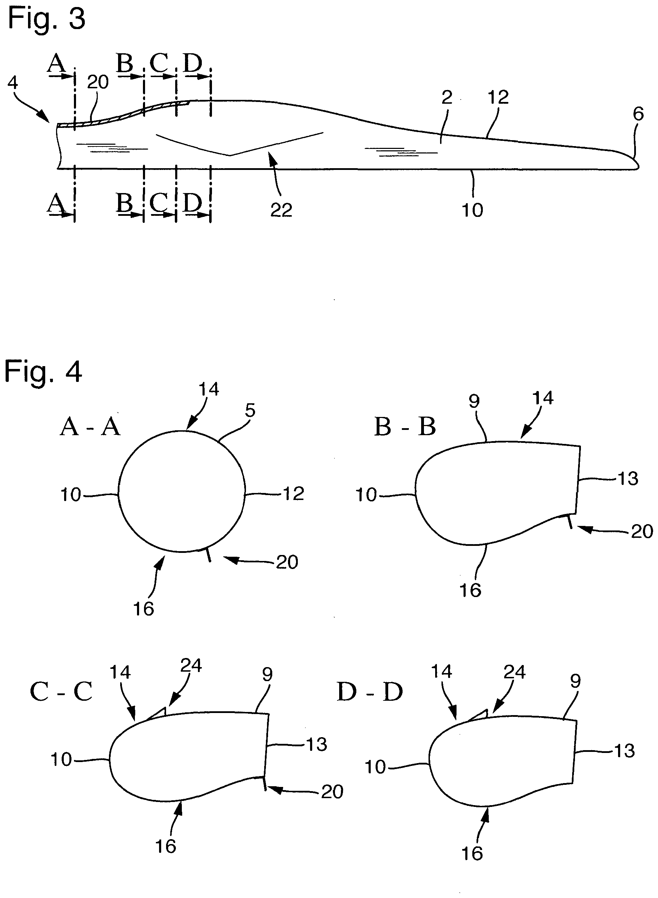

In Fig. 3 ist eine nicht maßstabsgetreue schematische Draufsicht auf ein erfindungsgemäßes Rotorblatt 2 gezeigt, dessen blattwurzelnaher Bereich im vorliegenden Fall von Interesse ist. In diesem Bereich ist an der Profilhinterkante 12 eine Strömungsabrissinduktionsvorrichtung 20 eingezeichnet, die sich im Wesentlichen vom Blattanschluss (nicht dargestellt) bis in einen Bereich erstreckt, der ein stumpfes aerodynamisches Profil aufweist. Ferner sind Querschnitte A-A, B-B, C-C und D-D eingezeichnet, die den zylindrischen Bereich und den Übergangsbereich abdecken.

Die in Fig. 3 dargestellte Strömungsabrissinduktionsvorrichtung 20 ist auf der Druckseite des Rotorblatts 2 angeordnet. Die ebenfalls in Fig. 3 gezeigte Reihe 22 von Vortexgeneratoren, die nicht einzeln dargestellt sind, sondern auf der dargestellten Linie aufgereiht sind, befindet sich auf der Saugseite des Rotorblatts 2. In einem kleinen Bereich entlang der Längsachse des Rotorblatts 2 überlappen die Reihe 22 der Vortexgeneratoren und die Strömungsabrissinduktionsvorrichtung 20. Die Reihe 22 von Vortexgeneratoren erstreckt sich in diesem Ausführungsbeispiel in den Bereich mit einem Vollprofil. Sie kann jedoch gegebenenfalls auch vorher enden.

Die Profilvorderkante 10 ist diejenige Kante, die vom Wind angeströmt wird. Die im Wesentlichen "V"-förmige Konfiguration der Reihe 22 von Vortexgeneratoren ergibt sich aus dem nicht dargestellten Profilverlauf des Rotorblatts 2. Dabei ist zu beachten, dass die Vortexgeneratoren in Sehnenrichtung in einem Bereich angeordnet sein sollen, in dem die umströmende Luft auf der Saugseite 14 noch keinen Strömungsabriss erfährt, jedoch auch nicht zu weit vorn, also an der Profilvorderkante, angeordnet sein sollen, weil die Wirkung der Vortexgeneratoren, also der Bereich, an dem zusätzlich die Strömung weiter an der Saugseite des Rotorblatts anliegen wird, begrenzt ist. Die "V"-Form entspricht somit im Wesentlichen einer Linie, die kurz vor dem errechneten Strömungsabriss des umströmenden Windes liegt, die ohne Vortexgeneratoren sich einstellen würde.

Die Form der Reihe 22 ergibt sich aus mehreren Faktoren. Ein einflussreicher Faktor für die Position der Vortexgeneratoren ist das jeweilige Rotorblattprofil, das sich entlang der Längserstreckung ändert. Die Vortexgeneratoren sollten am Anfang der Diffusion positioniert sein, die mit der jeweiligen Dickenrücklage korreliert.

Ein weiterer Faktor in der Form der Reihe 22 von Vortexgeneratoren ist die in Richtung auf die Rotorblattspitze 6 zunehmende Umströmungsgeschwindigkeit des Windes. Dies bedeutet zunächst, dass die Vortexgeneratoren mit steigender Distanz zum Rotorblattanschluss näher zur Profilvorderkante 10 angeordnet werden müssen, weil der Strömungsabriss auch früher erfolgen würde. Dies wird allerdings weitgehend von dem Profilverlauf des Rotorblatts überlagert. Weiter in Richtung auf die Rotorblattspitze 6 hin flacht das Profil weiter ab, so dass der Strömungsabriss wiederum etwas weiter hinten erfolgt und die Vortexgeneratoren somit wiederum weiter von der Profilvorderkante 10 entfernt angeordnet werden.

In Fig. 4 sind die Querschnitte entlang der Schnitte A-A, B-B, C-C und D-D aus Fig. 3 dargestellt. Auch diese Profile sind nicht maßstabsgetreu dargestellt, sondern lediglich schematisch.

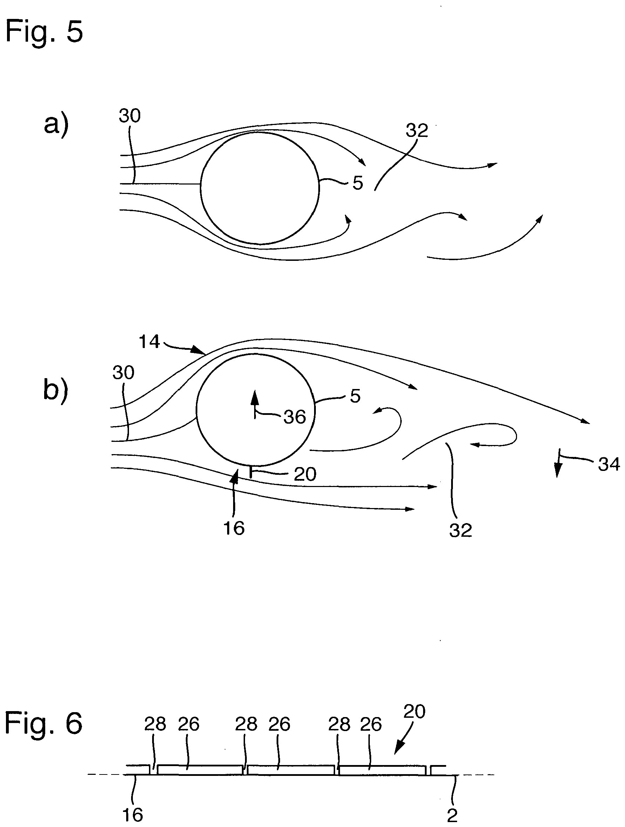

Der Schnitt A-A befindet sich im zylindrischen Bereich, so dass ein rundes Profil 5 vorhanden ist, welches sich von der Profilvorderkante 10 zur Profilhinterkante 12 erstreckt. Auch die Saugseite 14 und die Druckseite 16 sind markiert. Diese Nomenklatur beim runden Profil 5 ergibt sich aus dem weiteren Verlauf des Blattes, in dem tatsächlich eine Profilvorderkante 10, eine Profilhinterkante 12, eine Saugseite 14 und eine Druckseite 16 vorliegen. In Bezug auf diese Richtungen ist an der Druckseite 16 die abstehende, im Wesentlichen "L"-förmige Strömungsabrissinduktionsvorrichtung 20 gezeigt. Die Wirkung, die diese Strömungsabrissinduktionsvorrichtung 20 zeigt, wird in Fig. 5 noch erläutert werden.

In Fig. 4 ist im Schnitt B-B ein stumpfes aerodynamisches Querschnittsprofil 9 gezeigt, dessen Hinterkante eine stumpfe Hinterkante 13 ist. Auf der Druckseite 16 ist im Bereich bzw. sehr nahe an der stumpfen Hinterkante 13 ein weiteres Teil der Strömungsabrissinduktionsvorrichtung 20 angeordnet, die für einen verstärkten Strömungsabriss an dieser Stelle sorgt. In diesem Schnitt liegt noch keine Reihe von Vortexgeneratoren vor.

Etwas weiter in Richtung auf die Rotorblattspitze 6 befindet sich der Schnitt C-C, wobei das stumpfe aerodynamische Querschnittsprofil 9 wiederum an der druckseitigen Hinterkante die Strömungsabrissinduktionsvorrichtung 20 aufweist. Zusätzlich ist an der Saugseite 14 ein Vortexgenerator 24 der Reihe 22 von Vortexgeneratoren dargestellt. In diesem Bereich überlappen sich die beiden Einrichtungen. So ergibt sich ein gleitender Übergang, bei dem sich der abnehmende Einfluss der Strömungsabrissinduktionsvorrichtung und der zunehmende Einfluss der Vortexgeneratoren 24 mit höherer Umströmungsgeschwindigkeit des umgebenden Windfeldes ergänzen.

Schließlich ist in dem Schnitt D-D in Fig. 4 ein stumpfes aerodynamisches Profil 9 gezeigt, bei dem lediglich noch ein Vortexgenerator 24 auf der Saugseite 14 dargestellt ist. Die Strömungsabrissinduktionsvorrichtung 20 reicht nicht bis zu dieser Position.

In Fig. 5 ist schematisch die Umströmung eines zylindrischen Profils 5 durch ein einströmendes Windfeld 30 gezeigt. Fig. 5a) zeigt den Fall, in dem das zylindrische bzw. runde Profil 5 symmetrisch ist. In diesem Fall ergibt sich eine Wirbelschleppe 32, die in der gleichen Richtung wie der anströmende Wind weiter läuft. Dies ist der typische Fall, in dem das runde Profil 5 lediglich einen Widerstand für das Windfeld 30 darstellt.

In Fig. 5b) ist auf der unteren Seite, in diesem Fall Druckseite genannt, eine erfindungsgemäße Strömungsabrissinduktionsvorrichtung 20, in diesem Fall in Form einer Abrisskante, angeordnet. Diese ist auf einer 90°-Position in Bezug auf die Anströmrichtung angeordnet, also an der dicksten Stelle des runden Profils 5.

Auf der Anströmseite hat dies zur Folge, dass sich aufgrund des etwas erhöhten Luftwiderstands auf der Druckseite 16 Luft auf der Druckseite 16 staut und sich der zentrale Luftstrom, der theoretisch senkrecht auf das Profil trifft, und somit die Scheide zwischen Luft, die über die Saugseite 14 und Luft, die über die Druckseite 16 strömt, bildet, in Richtung auf die Druckseite 16 zu verschiebt. Gleichzeitig muss Luft einen weiten Weg über die Saugseite 14 laufen und wird dadurch schneller. Dies sorgt bereits für einen Auftrieb. Auch stromabwärts des Profils 5 ergibt sich eine Wirbelschleppe, die in diesem Fall jedoch aufgrund der druckseitig geringen Geschwindigkeit der Luft in einer zur Druckseite 16 gerichteten Richtung abgelenkt ist, was durch einen Ablenkungsvektor 34 dargestellt ist. Der dadurch gewonnene Auftrieb ist durch einen Auftriebsvektor 36 im Profil 5 dargestellt.

Fig. 6 stellt schematisch einen Ausschnitt einer erfindungsgemäßen Strömungsabrissinduktionsvorrichtung 20 dar, die aus mehreren Teilflächenkörpern 26 besteht, zwischen denen jeweils eine Biegungsfuge 28 angeordnet ist. Dieses ist auf der Druckseite 16 auf dem Rotorblatt 2 aufgeklebt oder auflaminiert. Die Biegungsfugen 28 erlauben es, dass sich das Rotorblatt 2 unter Belastung biegen kann, ohne dass die Strömungsabrissinduktionsvorrichtung 20 beschädigt wird. Typische Längen der Teilflächenkörper 26 sind typischerweise 50 cm. Die Biegungsfugen 28 haben ein lichtes Maß oder Spaltmaß von ca. einem bis mehreren Millimetern.

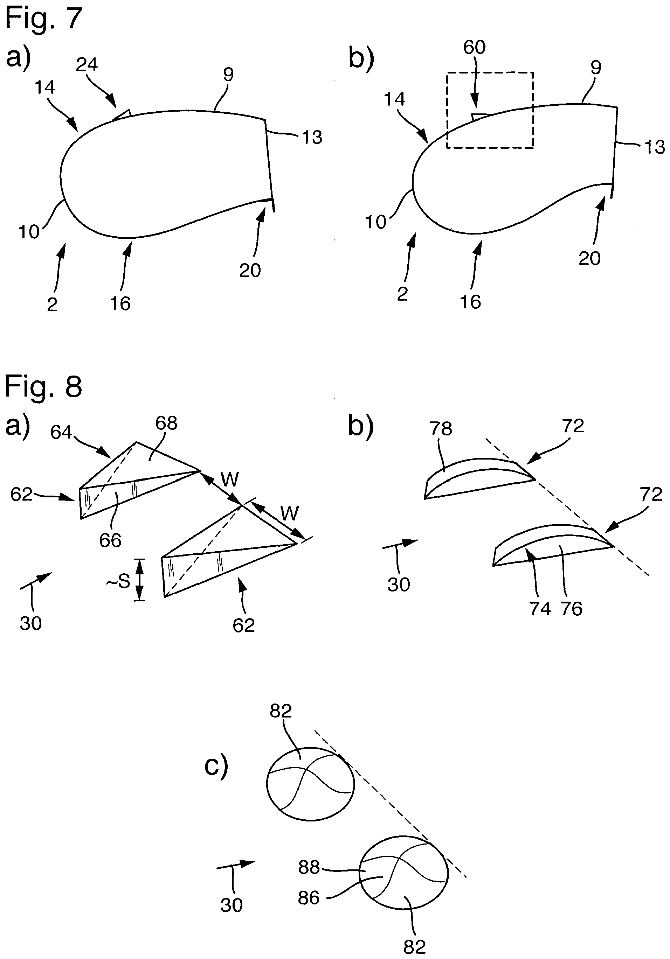

In Fig. 7 a) ist ein Profilbereich eines Rotorblatts 2 im Querschnitt dargestellt, der im Wesentlichen dem Querschnitt C-C aus Fig. 4 entspricht. An der Saugseite ist, wie in Fig. 4, ein Vortexgenerator 24 dargestellt. In Fig. 7 b) ist dieser durch eine Wirbelkante 60 ersetzt worden, die einen keilförmigen Querschnitt aufweist, wobei die Keilform jedoch im Gegensatz zum Vortexgenerator 24 in der Höhe abnehmend ausgebildet ist.

Fig. 8 zeigt drei Beispiele erfindungsgemäßer Formkörper von Wirbelkanten. Die Formkörper 62 in Fig. 8 a) weisen jeweils eine Keilform mit dreieckiger Grundfläche auf, die an ihrer Spitze vom Windfeld 30 angeströmt wird. Die Formkörper weisen jeweils einen Schaumkern 66 auf, der mit einer Faserverbund-Schicht 68 überlaminiert bzw. auf das Rotorblatt 2 auflaminiert ist. Dies ergibt eine sehr dauerhafte Verbindung und einen sehr guten Schutz des Schaumkerns. Die Höhe S entspricht in etwa der Dicke der lokalen Grenzschicht. Die Weite W der Formkörper 62 an ihrem stromabwärtigen Ende kann vorteilhafterweise auch in etwa dem Abstand zweier keilförmiger Formkörper 62 an ihrem stromabwärtigen Ende voneinander entsprechen.

Die Formkörper 72 gemäß Fig. 8 b) sind kreisscheibenabschnittsförmig ausgebildet, d. h., die Seitenwände sind gerade und die Oberfläche ist ein Teil eines Kreises. Diese Flächen sind durch scharfe Kanten 74 voneinander getrennt. Die Oberfläche kann auch eine kompliziertere Form haben und sich ohne Kante von der Oberfläche des Rotorblatts 2 erheben. Die Wirbelkanten bzw. Formkörper 72 sind in Richtung der Luftströmung gestaffelt hintereinander angeordnet. Auch diese Formkörper 72 weisen einen Schaumkern 76 auf, der mit einer Faserverbund-Schicht 68 bzw. Faserverbund-Lage überlaminiert bzw. auf das Rotorblatt 2 auflaminiert ist.

In Fig. 8 c) sind Formkörper 82 als Wirbelkanten gezeigt, die eine hügelförmige Form haben. Auch sie sind gestaffelt in Luftströmungsrichtung hintereinander angeordnet und weisen einen mit einer Faserverbund-Schicht 88 überlaminierten Schaumkern 86 auf. Diese Form und Anordnung ergibt auch ohne scharfe Kanten eine effiziente Verwirbelung der Grenzschicht.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 2: Rotorblatt
- 4: Rotorblattwurzel
- 5: rundes Profil
- 6: Rotorblattspitze
- 8: aerodynamisches Vollprofil
- 9: stumpfes aerodynamisches Querschnittsprofil
- 10: Profilvorderkante
- 12: Profilhinterkante
- 13: stumpfe Hinterkante
- 14: Saugseite
- 16: Druckseite
- 17: zylindrischer Bereich
- 18: Übergangsbereich
- 19: Vollprofilbereich
- 20: Strömungsabrissinduktionsvorrichtung
- 22: Reihe von Vortexgeneratoren
- 24: Vortexgenerator
- 26: Teilflächenkörper
- 28: Biegungsfuge
- 30: anströmendes Windfeld
- 32: Wirbelschleppe
- 34: Ablenkungsvektor
- 36: Auftriebsvektor
- 40: Verlauf des Auftriebskoeffizienten C_{L}
- 50: Verlauf des Widerstandskoeffizienten c_{D}
- 52: hoher negativer Gradient
- 54: nutzbarer Bereich des Anstellwinkels α
- 60: Wirbelkante
- 62: keilförmiger Formkörper
- 64: scharfe Kante
- 66: Schaumkern
- 68: Faserverbund-Schicht
- 72: scheibenabschnittsförmiger Formkörper
- 74: scharfe Kante
- 76: Schaumkern
- 78: Faserverbund-Schicht
- 82: hügelförmiger Formkörper
- 86: Schaumkern
- 88: Faserverbund-Schicht
- C_{L}: Auftriebsbeiwert
- C_{D}: Widerstandskoeffizient
- S: Höhe der lokalen Grenzschichtdicke
- W: Weite
- α: Anstellwinkel
- αₛₙ: negativer Stallwinkel
- αₛₚ: positiver Stallwinkel

## Patentansprüche

1. Rotorblatt (2) einer Windenergieanlage mit einer Längserstreckung, die sich von einer Rotorblattwurzel (4) zu einer Rotorblattspitze (6) erstreckt, wobei das Rotorblatt (2) ein in Längsrichtung veränderliches Querschnittsprofil (5, 8, 9) aufweist, das eine Profilvorderkante (10) und eine Profilhinterkante (12) aufweist, die über eine Saugseite (14) und eine Druckseite (16) des Querschnittsprofils (5, 8, 9) verbunden sind, wobei das Rotorblatt (2) in einem rotorblattwurzelnahen Bereich ein rundes oder ovales Profil (5) aufweist, das in Richtung auf die Rotorblattspitze (6) zunächst in einem Übergangsbereich (18) in ein stumpfes aerodynamisches Querschnittsprofil (9) mit einer stumpfen Hinterkante (13) und weiter in Richtung auf die Rotorblattspitze (6) anschließend in ein aerodynamisches Vollprofil (8) übergeht, bei dem sich die saugseitigen und druckseitigen Profile an der Hinterkante (12) unter einem spitzen Winkel treffen, **dadurch gekennzeichnet, dass** im zylindrischen oder ovalen blattwurzelnahen Bereich an der Druckseite (12) des Rotorblatts (2) wenigstens abschnittsweise eine sich im Wesentlichen in Längsrichtung des Rotorblatts (2) erstreckende Strömungsabrissinduktionsvorrichtung (20) angeordnet ist, die im Übergangsbereich (18) wenigstens abschnittsweise an oder im Bereich der druckseitigen stumpfen Hinterkante (13) des stumpfen aerodynamischen Querschnittsprofils (9) fortgesetzt ist, wobei die Strömungsabrissinduktionsvorrichtung (20) "L"-förmig ausgebildet ist; und wobei in dem Übergangsbereich (18) auf der Saugseite (14) des Rotorblatts (2) wenigstens eine Reihe (22) von Vortexgeneratoren (24) und/oder Wirbelkanten (60) angeordnet sind.

2. Rotorblatt (2) nach Anspruch 1, **dadurch gekennzeichnet, dass** die Strömungsabrissinduktionsvorrichtung (20) als ein, insbesondere in Längsrichtung des Rotorblatts (20) ein- oder mehrfach unterteilter, längserstreckter im Wesentlichen radial vom Profil abstehender Flächenkörper ausgebildet ist, dessen abstehende Höhe zwischen 1% und 5% der Sehnenlänge des Querschnittsprofils (9) beträgt, insbesondere zwischen 1% und 3% der Sehnenlänge, insbesondere bis zu 2% der Sehnenlänge.

3. Rotorblatt (2) nach Anspruch 1 oder 2, **dadurch gekennzeichnet, dass** die Strömungsabrissinduktionsvorrichtung (20) im rotorblattwurzelseitigen zylindrischen oder ovalen Teil des Rotorblatts (2) an der dicksten Stelle des runden oder ovalen Profils (5) angeordnet ist, in Bezug auf eine Anströmungsrichtung eines Windfeldes (30) bei Betrieb einer Windenergieanlage im Teillastbereich kurz unterhalb ihrer Nennleistung, insbesondere bei zwischen 90% und 100% ihrer Nennleistung.

4. Rotorblatt (2) nach einem der Ansprüche 1 bis 3, **dadurch gekennzeichnet, dass** die Strömungsabrissinduktionsvorrichtung (20) in Längsrichtung des Rotorblatts (2) in zwei oder mehr Teilflächenkörper (26) mit dazwischen angeordneten Biegungsfugen (28) unterteilt ist, wobei insbesondere die Teilflächenkörper (26) jeweils eine Länge zwischen 30 und 100 cm aufweisen und die Biegungsfugen (28) ein Spaltmaß von zwischen 1 und 5 mm, insbesondere zwischen 1 und 3 mm, aufweisen.

5. Rotorblatt (2) nach einem der Ansprüche 1 bis 4, **dadurch gekennzeichnet, dass** die Strömungsabrissinduktionsvorrichtung (20) auf das Rotorblatt (2) aufgeklebt und/oder auflaminiert ist und insbesondere unter Verwendung eines GFK-Materials oder eines Spritzgussmaterial hergestellt ist.

6. Rotorblatt (2) nach einem der Ansprüche 1 bis 5, **dadurch gekennzeichnet, dass** die von dem Rotorblatt (2) abstehende Höhe der Strömungsabrissinduktionsvorrichtung (20) in Längsrichtung des Rotorblatts (2) konstant ist oder zur Rotorblattspitze (6) hin abnimmt.

7. Rotorblatt (2) nach einem der Ansprüche 1 bis 6, **dadurch gekennzeichnet, dass** die Strömungsabrissinduktionsvorrichtung (20) in Richtung auf die Rotorblattspitze (6) im Übergangsbereich (18) an einer Position endet, an der das Rotorblatt (2) ein stumpfes aerodynamisches Querschnittsprofil (9) aufweist.

8. Rotorblatt (2) nach einem der Ansprüche 1 bis 6, **dadurch gekennzeichnet**, sich die Reihe (22) von Vortexgeneratoren (24) und/oder Wirbelkanten (60) und die Strömungsabrissinduktionsvorrichtung (20) in Längsrichtung des Rotorblatts (2) im Übergangsbereich (18) wenigstens teilweise überschneiden, insbesondere bei einer relativen Profildicke von zwischen 60% und 80%, insbesondere zwischen 65% und 75%.

9. Rotorblatt (2) nach Anspruch 8, **dadurch gekennzeichnet, dass** die Reihe (22) von Vortexgeneratoren (24) und/oder Wirbelkanten (60) sich in den Bereich erstreckt, in dem das Rotorblatt (2) ein aerodynamisches Vollprofil aufweist, wobei insbesondere blattspitzenseitig die Reihe (22) der Vortexgeneratoren (24) und/oder Wirbelkanten (60) bei zwischen 30% und 55%, insbesondere zwischen 40% und 50%, der Rotorblatterstreckung von der Rotorblattwurzel (4) zur Rotorblattspitze (6) endet.

10. Rotorblatt (2) nach Anspruch 8 oder 9, **dadurch gekennzeichnet, dass** die Wirbelkanten (60) als scharfkantige oder abgerundete Formkörper (62, 72, 82) ausgebildet sind und/oder einen mit einem faserverstärkten Verbundmaterial (68, 78, 88) überlaminierten Schaumkern (66, 76, 86) aufweisen und/oder mittels einer Schicht aus einem faserverstärkten Verbundmaterial (68, 78, 88) auf das Rotorblatt (2) auflaminiert sind.

11. Rotorblatt (2) nach einem der Ansprüche 8 bis 10, **dadurch gekennzeichnet, dass** die Wirbelkanten (60) paarweise radial gestaffelt auf dem Rotorblatt (2) angeordnet sind.

12. Windenergieanlage mit einem Rotorblatt (2) nach einem der Ansprüche 1 bis 11.

13. Verwendung einer Strömungsabrissinduktionsvorrichtung (20) zur Erzeugung von Auftrieb in einem Blattwurzelbereich eines Rotorblatts (2) nach einem der Ansprüche 1 bis 11.

## Claims

1. A rotor blade (2) of a wind energy installation, the rotor blade (2) having a longitudinal extent which extends from a rotor blade root (4) to a rotor blade tip (6), wherein the rotor blade (2) has a cross-sectional profile (5, 8, 9) which is variable in the longitudinal direction and which has a profile leading edge (10) and a profile trailing edge (12) which are connected to one another via a suction side (14) and a pressure side (16) of the cross-sectional profile (5, 8, 9), wherein, in a region close to the rotor blade root, the rotor blade (2) has a round or an oval profile (5) which, in the direction towards the rotor blade tip (6), initially changes, in a transition region (18), into a blunt aerodynamic cross-sectional profile (9) with a blunt trailing edge (13) and, further in the direction towards the rotor blade tip (6), subsequently changes into an aerodynamic solid profile (8), in which the profiles on the suction side and on the pressure side meet at an acute angle at the trailing edge (12), **characterised in that**, in at least some portions of the cylindrical or oval region close to the blade root, a stall induction device (20) which extends substantially in the longitudinal direction of the rotor blade (2) is arranged on the pressure side (12) of the rotor blade (2), which stall induction device (20) is continued, at least in some portions of the transition region (18), at or in the region of the blunt trailing edge (13) of the pressure side of the blunt aerodynamic cross-sectional profile (9), wherein the stall induction device (20) is constructed in the shape of an "L"; and wherein, in the transition region (18), at least one series (22) of vortex generators (24) and / or vortex edges (60) are arranged on the suction side (14) of the rotor blade (2).

2. The rotor blade (2) as claimed in claim 1, **characterised in that** the stall induction device (20) is constructed in the form of a surface body which extends longitudinally and which projects from the profile in a substantially radial direction, in particular in the form of a surface body which extends longitudinally and which projects from the profile in a substantially radial direction and which is subdivided in the longitudinal direction of the rotor blade (20), once or a plurality of times, wherein the projecting height of the surface body amounts to between 1 % and 5 % of the chord length of the cross-sectional profile (9), in particular between 1 % and 3 % of the chord length, in particular up to 2 % of the chord length.

3. The rotor blade (2) as claimed in claim 1 or 2, **characterised in that** the stall induction device (20) is arranged in the cylindrical or oval part of the rotor blade (2) in the region close to the rotor blade root at the thickest point of the round or oval profile (5), with respect to an inflow direction of a wind field (30) during operation of a wind energy installation in the partial load regime a little below its rated power, in particular at between 90 % and 100 % of its rated power.

4. The rotor blade (2) as claimed in any one of the claims 1 to 3, **characterised in that**, in the longitudinal direction of the rotor blade (2), the stall induction device (20) is subdivided into two or more partial surface bodies (26) with bending joints (28) arranged therebetween, in particular wherein the partial surface bodies (26) each have a length of between 30 and 100 cm and wherein the dimension of a gap of the bending joints (28) is between 1 and 5 mm, in particular between 1 and 3 mm.

5. The rotor blade (2) as claimed in any one of the claims 1 to 4, **characterised in that** the stall induction device (20) is glued and / or laminated onto the rotor blade (2) and is produced in particular using a GRP material or an injection moulding material.

6. The rotor blade (2) as claimed in any one of the claims 1 to 5, **characterised in that** the height of the stall induction device (20) projecting from the rotor blade (2) is constant in the longitudinal direction of the rotor blade (2) or decreases towards the rotor blade tip (6).

7. The rotor blade (2) as claimed in any one of the claims 1 to 6, **characterised in that**, in a direction towards the rotor blade tip (6), the stall induction device (20) terminates in the transition region (18) at a position at which the rotor blade (2) has a blunt aerodynamic cross-sectional profile (9).

8. The rotor blade (2) as claimed in any one of the claims 1 to 6, **characterised in that**, in the longitudinal direction of the rotor blade (2), the series (22) of vortex generators (24) and / or vortex edges (60) and the stall induction device (20) at least partially overlap in the transition region (18), in particular at a relative profile thickness of between 60 % and 80 %, in particular between 65 % and 75 %.

9. The rotor blade (2) as claimed in claim 8, **characterised in that** the series (22) of vortex generators (24) and / or vortex edges (60) extends into the region in which the rotor blade (2) has a solid aerodynamic profile, in particular wherein, on the side towards the blade tip, the series (22) of vortex generators (24) and / or vortex edges (60) ends at between 30 % and 55 %, in particular between 40 % and 50 %, of the extent of the rotor blade from the rotor blade root (4) to the rotor blade tip (6).

10. The rotor blade (2) as claimed in claim 8 or 9, **characterised in that** the vortex edges (60) are constructed as sharp-edged or rounded shaped bodies (62, 72, 82) and / or have a foam core (66, 76, 86) which has been overlaminated with a fibre-reinforced composite material (68, 78, 88) and / or are laminated onto the rotor blade (2) by means of a layer of a fibre-reinforced composite material (68, 78, 88).

11. The rotor blade (2) as claimed in any one of the claims 8 to 10, **characterised in that** the vortex edges (60) are arranged on the rotor blade (2) in a radially staggered manner, in pairs.

12. A wind energy installation with a rotor blade (2) as claimed in any one of the claims 1 to 11.

13. Use of a stall induction device (20) for generating lift in a region close to the rotor blade root of a rotor blade (2) as claimed in any one of the claims 1 to 11.

## Revendications

1. Pale de rotor (2) d'une éolienne avec une étendue longitudinale qui s'étend d'un pied de pale de rotor (4) à un bout de pale de rotor (6), dans laquelle la pale de rotor (2) présente un profil de section transversale (5, 8, 9) modifiable dans le sens longitudinal qui présente un bord d'attaque de profil (10) et un bord de fuite de profil (12) qui sont reliés par le biais d'un extrados (14) et d'un intrados (16) du profil de section transversale (5, 8, 9), dans laquelle la pale de rotor (2) présente dans une zone proche du pied de pale de rotor un profil rond ou ovale (5) qui passe en direction du bout de pale de rotor (6) tout d'abord dans une zone de transition (18) en un profil de section transversale aérodynamique tronqué (9) avec un bord de fuite (13) tronqué et au-delà en direction du bout de pale de rotor (6) ensuite en un profil plein (8) aérodynamique, pour lequel les profils côté extrados et intrados se rencontrent au niveau du bord de fuite (12) selon un angle aigu, **caractérisée en ce qu'**un dispositif d'induction de décollement de courant (20) s'étendant sensiblement dans le sens longitudinal de la pale de rotor (2) est agencé au moins par sections dans la zone cylindrique ou ovale proche du pied de pale au niveau de l'intrados (12) de la pale de rotor (2), lequel est prolongé dans la zone de transition (18) au moins par sections au niveau de ou dans la zone du bord de fuite (13) tronqué côté intrados du profil de section transversale (9) aérodynamique tronqué, dans laquelle le dispositif d'induction de décollement de courant (20) est réalisé en forme de « L » ; et dans laquelle au moins une rangée (22) de générateurs de tourbillon (24) et/ou bords de tourbillon (60) est agencée dans la zone de transition (18) sur l'extrados (14) de la pale de rotor (2).

2. Pale de rotor (2) selon la revendication 1, **caractérisée en ce que** le dispositif d'induction de décollement de courant (20) est réalisé comme un corps plan dépassant sensiblement radialement du profil, étiré en longueur, divisé une ou plusieurs fois en particulier dans le sens longitudinal de la pale de rotor (20), dont la hauteur qui dépasse s'élève entre 1 % et 5 % de la longueur de corde du profil de section transversale (9), en particulier entre 1 % et 3 % de la longueur de corde, en particulier jusqu'à 2 % de la longueur de corde.

3. Pale de rotor (2) selon la revendication 1 ou 2, **caractérisée en ce que** le dispositif d'induction de décollement de courant (20) est agencé dans la partie cylindrique ou ovale côté pied de pale de rotor de la pale de rotor (2) au point le plus épais du profil (5) rond ou ovale, en ce qui concerne un sens d'écoulement d'un champ éolien (30) lors du fonctionnement d'une éolienne dans la plage de charge partielle juste en dessous de sa puissance nominale, en particulier entre 90 % et 100 % de sa puissance nominale.

4. Pale de rotor (2) selon l'une quelconque des revendications 1 à 3, **caractérisée en ce que** le dispositif d'induction de décollement de courant (20) est divisé dans le sens longitudinal de la pale de rotor (2) en deux ou plus corps de surface partielle (26) avec des joints de flexion (28) agencés entre ceux-ci, dans laquelle en particulier les corps de surface partielle (26) présentent respectivement une longueur entre 30 et 100 cm et les joints de flexion (28) une mesure de fente entre 1 et 5 mm, en particulier entre 1 et 3 mm.

5. Pale de rotor (2) selon l'une quelconque des revendications 1 à 4, **caractérisée en ce que** le dispositif d'induction de décollement de courant (20) est collé sur la pale de rotor (2) et/ou stratifié et est fabriqué en particulier en utilisant un matériau GFK ou un matériau de coulage par injection.

6. Pale de rotor (2) selon l'une quelconque des revendications 1 à 5, **caractérisée en ce que** la hauteur qui dépasse de la pale de rotor (2) du dispositif d'induction de décollement de courant (20) est constante dans le sens longitudinal de la pale de rotor (2) ou diminue vers le bout de pale de rotor (6).

7. Pale de rotor (2) selon l'une quelconque des revendications 1 à 6, **caractérisée en ce que** le dispositif d'induction de décollement de courant (20) se termine en direction du bout de pale de rotor (6) dans la zone de transition (18) dans une position, dans laquelle la pale de rotor (2) présente un profil de section transversale (9) aérodynamique tronqué.

8. Pale de rotor (2) selon l'une quelconque des revendications 1 à 6, **caractérisée en ce que** la rangée (22) de générateurs de tourbillon (24) et/ou bords de tourbillon (60) et le dispositif d'induction de décollement de courant (20) se chevauchent au moins partiellement dans le sens longitudinal de la pale de rotor (2) dans la zone de transition (18), en particulier pour une épaisseur de profil relative entre 60 % et 80 %, en particulier entre 65 % et 75 %.

9. Pale de rotor (2) selon la revendication 8, **caractérisée en ce que** la rangée (22) de générateurs de tourbillon (24) et/ou bords de tourbillon (60) s'étend dans la zone, dans laquelle la pale de rotor (2) présente un profil plein aérodynamique, dans laquelle en particulier côté bout de pale la rangée (22) des générateurs de tourbillon (24) et/ou bords de tourbillon (60) se termine entre 30 % et 55 %, en particulier entre 40 % et 50 %, de l'étendue de pale de rotor du pied de pale de rotor (4) au bout de pale de rotor (6).

10. Pale de rotor (2) selon la revendication 8 ou 9, **caractérisée en ce que** les bords de tourbillon (60) sont réalisés comme corps moulés (62, 72, 82) arrondis ou à arêtes vives et/ou présentent une âme en mousse (66, 76, 86) sur-stratifiée avec un matériau composite (68, 78, 88) renforcé de fibre et/ou sont stratifiés au moyen d'une couche en un matériau composite (68, 78, 88) renforcé de fibre sur la pale de rotor (2).

11. Pale de rotor (2) selon l'une quelconque des revendications 8 à 10, **caractérisée en ce que** les bords de tourbillon (60) sont agencés par paire de manière radialement échelonnée sur la pale de rotor (2).

12. Eolienne avec une pale de rotor (2) selon l'une quelconque des revendications 1 à 11.

13. Utilisation d'un dispositif d'induction de décollement de courant (20) pour la génération de la portance dans une zone de pied de pale d'une pale de rotor (2) selon l'une quelconque des revendications 1 à 11.
